# EUROPEAN PATENT APPLICATION

(11) **EP 1 246 436 A1**
(43) Date of publication of application: **02.10.2002**
(21) Application number: 01303059.8
(22) Date of filing: 30.03.2001
(51) Int. Cl.: H04M 3/42

(54) **Computer controlled call setup between two telephones (CTI)**

(71) Applicant: BRITISH TELECOMMUNICATIONS public limited company, London EC1A 7AJ (GB)
(72) Inventor: The designation of the inventor has not yet been filed
(74) Representative: Semos, Robert Ernest Vickers

(57) **Abstract**

A method of operating a computer telephony integration (CTI) system comprising a switch and a CTI controller therefor, and a plurality of user workstations, each workstation comprising a computer connected to the CTI controller and a telephone connected to a corresponding port of the switch, the method comprising the steps of:
(a) receiving at the CTI controller from a said computer a make call request containing a destination number and a source number;
(b) commanding the switch to apply a ringing signal to the port corresponding to that source number;
(c) sending a notification to the CTI controller when it is detected that that port is in off hook condition; and in response to receipt of that notification,
(d) commanding the switch to cease applying the ringing signal; and
(e) commanding the switch to make a call to the destination number from that port.

## Description

This invention relates to the use of a computer for controlling the operation of a telephony system, such use is known in the art as computer telephony integration (CTI), and the systems employing such control are known as CTI systems.

As a general background, the reader will find examples of such CTI systems disclosed in the articles "Introduction to Computer Telephony Integration", by A. Catchpole, G. Crook, and D. Chesterman, British Telecommunications Engineering, Vol. 14, July 1995; "Computer Telephony Integration - The Meridian Norstar", by A. Catchpole, British Telecommunications Engineering, Vol. 14, Oct. 1995; "Computer Telephony Integration - The Meridian 1 PBX", by P. Johnson, A. Catchpole, and L. Booton, British Telecommunications Engineering, Vol. 15, July 1996; "Callscape - Computer Telephony Integration for the Small Business", by G. Hillson, G. Hardcastle, and M. Allington, British Telecommunications Engineering, Vol. 15, Jan. 1997; "Call Centres - Doing Business by Telephone" by M. Bonner, British Telecommunications Engineering, Vol. 13, July 1994; and "ClickDial - Web-Enabled CTI", by R. Brockbank, G. Crook and D. Emerson, British Telecommunications Engineering, Vol. 18, April 1999.

In accordance with a first aspect of the present invention, there is provided a method of operating a computer telephony integration (CTI) system comprising a switch and a CTI controller therefor, and a plurality of user workstations, each workstation comprising a computer connected to the CTI controller and a telephone connected to a corresponding port of the switch, the method comprising the steps of:
(a) receiving at the CTI controller from a said computer a make call request containing a destination number and a source number;
(b) commanding the switch to apply a ringing signal to the port corresponding to that source number;
(c) sending a notification to the CTI controller when it is detected that that port is in off hook condition; and in response to receipt of that notification,
(d) commanding the switch to cease applying the ringing signal; and
(e) commanding the switch to make a call to the destination number from that port.

In accordance with a second aspect of the present invention, there is provided a computer telephony integration (CTI) system comprising a switch and a CTI controller therefor, and a plurality of user workstations, each workstation comprising a computer connected to the CTI controller and a telephone connected to a corresponding port of the switch, the CTI system comprising:
means responsive to receipt at the CTI controller from a said computer of a make call request containing a destination number and a source number for commanding the switch to apply a ringing signal to the port corresponding to that source number;
means responsive to receipt of a notification that that port is in off hook condition for commanding the switch to cease applying the ringing signal and to make a call to the destination number from that port.

Specific embodiments of the present invention will now be described by way of example with reference to the drawings in which:

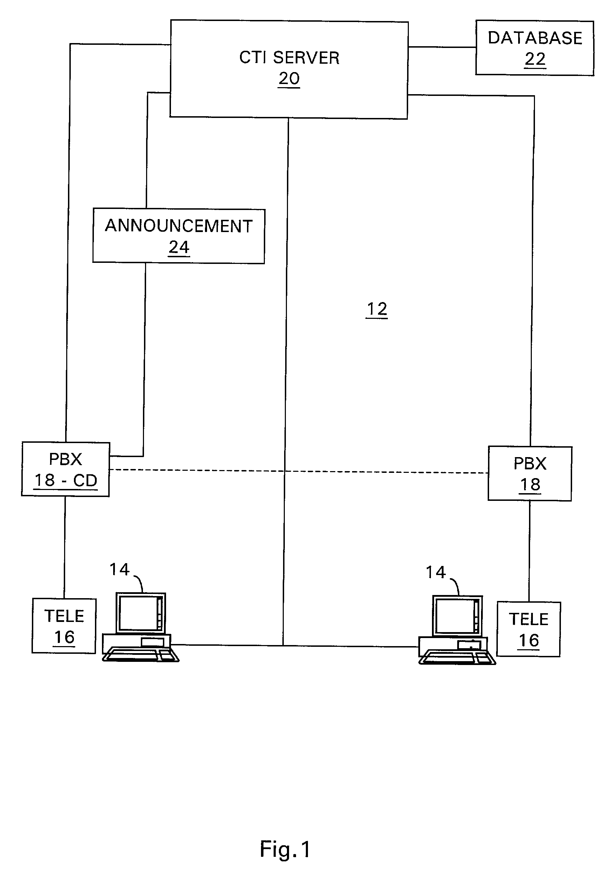

Figure 1 is a schematic diagram showing the general telephony and data arrangement of the present invention.

### Acronyms used in the specific description

- BT: British Telecommunications public limited company
- CLI: Calling Line Identity
- CTI: Computer Telephony Integration
- DN: directory number
- GUI: Graphical User Interface
- HTML: hypertext markup language
- IPA: Internet Protocol Address
- NM: NetMeeting
- PBX: Private Branch Exchange

Figure 1 shows the basic elements of a ClickDial system, as disclosed in the above ClickDial article, which will now be described by way of background to the present invention.

In Figure 1, each of a plurality of users of a network 12 is associated with a respective computer 14 and a respective telephone 16 which is an extension of one of a plurality of local CTI-enabled PBXs 18 arranged for operation in association with a common CTI server 20. By extension is meant that the telephone is connected to a port of the PBX 18 having a line circuit card appropriate to the type of telephone, such cards being referred to as ports of the PBX 18,and each port being associated with the respective directory number (DN) of the associated telephone.

In this specific embodiment the PBXs 18 are Nortel Meridians, and the telephones 16 are Meridian Featurephones capable of on hook dialling. The co-location of a telephone 16 and its associated computer 14 is referred to herein as a workstation.

Each of the users is employed by a common employer, in this specific embodiment BT, and has a respective entry in a common corporate telephone directory held on a database 22 which is accessed from the user's computer 14 via the server 20, and for a user to be an originating ClickDial user he needs to be a registered user of BT's ClickDial service for making a telephone call by clicking on a MakeCall button associated with a desired destination user's displayed entry from the common telephone directory. In this specific embodiment, the server 20 is referred to as the ClickDial server.

In brief, a user registers with the ClickDial service by accessing a ClickDial Home Page and clicking on a Registration Button in that page. This sends a request packet from the user's computer 14 to the ClickDial server 20, requesting the download of the ClickDial Registration Page. The ClickDial server 20 receives that request packet, and retrieves the source Internet Protocol address (IPA) from its header, generates a nine digit pseudorandom number and includes it in an HTML forms page (i.e. the Registration Page), and sends that page to the user's computer 14. This page has boxes for the user to enter identification data enabling the ClickDial server 20 to access the database 22 and locate the user's entry. The data required is the user's Operational Unit Code and his Employee Identification Number (EIN). Although the EIN is unique and would be sufficient to identify the user, the combination of these two data items provides a degree of security. Aspects of this ClickDial registration procedure are the subject of the applicant's international patent application publication number WO 99/515.

The Registration Page contains instructions requesting the user to make a telephone call from his associated PBX telephone 16 to a specified destination DN, which is a DN within the numbering range of a particular PBX 18-CD. On receipt of a call from that user, that PBX 18-CD retrieves the CLI from the signalling information and passes that to the ClickDial server 20. The ClickDial server 20 instructs the PBX 18-CD to connect that call to a recorded announcement facility 24, and instructs the recorded announcement facility 24 to play an instruction for the user to dial on his keypad the nine digit number displayed on his computer.

The PBX 18-CD reports received digits to the ClickDial server 20, which then compares the original nine digit number with the digits received at the PBX 18-CD, and, if they match, records that user as an authorised user of the ClickDial service, and creates a ClickDial cookie at the user's computer 14 containing a pointer to a location in the database 22 storing the actual data corresponding to that cookie. For convenience, where a distinction needs to be made, the terms cookie pointer and cookie data are used. In the preferred embodiment, the cookie data comprises the user's DN (known from the received CLI) and the identity of the PBX 18 local to that user (retrieved from the database 22 as one of the items of data stored for each user). The ClickDial server 20 completes its registration procedure by amending a directory cookie at the user's computer 14 to request download of directory search results in ClickDial form instead of normal search result form. In the display of a ClickDial directory search result there is a ClickDial button adjacent to each displayed retrieved entry.

When the user accesses the directory service and enters the name of a desired called user, the ClickDial server 20 will perform a search to locate all entries matching that search criterion and send a page displaying the search result, i.e. one or more retrieved entries, each with their associated ClickDial button, i.e. the MakeCall button referred to above. The user clicks on the appropriate ClickDial button, and a ClickDial application on that computer is activated to send to the ClickDial server 20 a MakeCall request packet containing the contents of the user's ClickDial cookie and the DN associated with that entry. The ClickDial server 20 now accesses the cookie data and sends an instruction to the user's local PBX 18 for a call to be made from the source DN to the destination DN. With the speed of modern telecommunications, the user hears ringing tone a small fraction of a second after clicking on a ClickDial button.

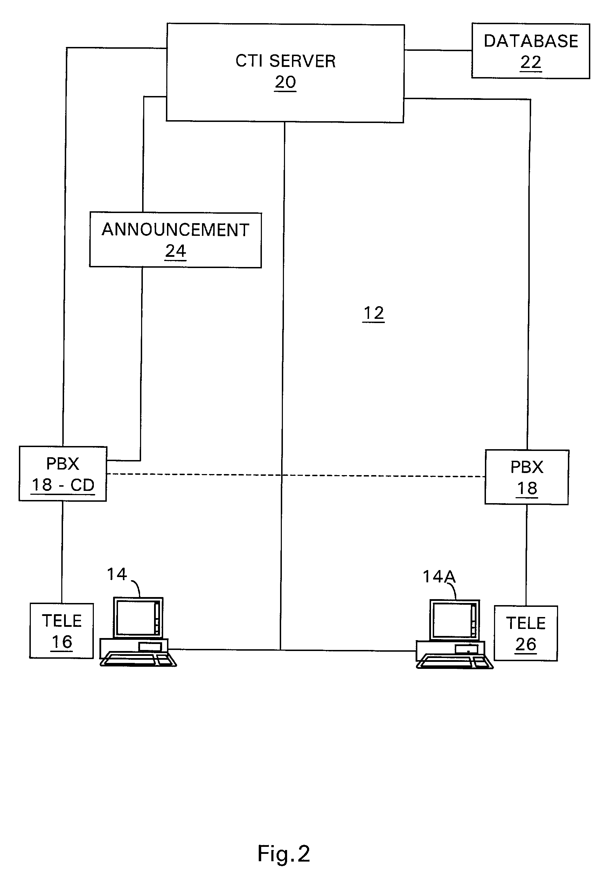

Turning now to the present invention, in Figure 2 there is shown a workstation comprising an analogue telephone 26 connected to the PBX 18, and a computer 14A. The analogue telephone 26 cannot be used for on hook dialling, because the analogue line circuit card at the PBX 18 cannot be controlled as can digital line circuit cards used with the Meridian Featurephones 16.

The PBX 18 is arranged to provide, in addition to its standard alerting signal (ringing signal) which is applied in respect of an incoming call, a distinctive ringing signal. It may have a range of such distinctive ringing signals, but it sufficient for the purposes of the present invention that the user can distinguish between two ringing signals, namely standard and one distinctive ringing signal, which he can recognise as a ClickDial ringing signal.

When a user at that workstation clicks on a ClickDial button displayed on his computer 14A for a telephone call to be made to a particular person, the ClickDial application on that computer operates in normal manner and the ClickDial server 20 accesses the cookie data, as usual. The ClickDial server 20 is then in possession of the destination DN and the user's source DN, and the user's profile is accessed to ascertain if his telephone is suitable for normal ClickDial handling, or whether the special handling of the present invention is required. If the latter, then a command is sent to the PBX 18 for ClickDial ringing signal to be applied to the line circuit card corresponding to that source DN.

The user's telephone 26 now produces an audible alert corresponding to that ClickDial ringing signal, which is recognised by the user. The user now knows that his telephone is not alerting him to an incoming call, and that he must now pick up the handset to continue the remainder of the special ClickDial procedure for his analogue telephone. When the telephone 26 goes off hook, this state is detected at the switch port and reported to the CTI server 20, which responds by sending to the PBX 18 a command, including the destination DN, for the PBX 18 to make an originating call from that source DN to the supplied destination DN.

In a variant, the PBX 18 applies the standard ringing signal instead of the above distinctive ringing signal. The user will not now know the PBX 18 is alerting him to an incoming call which has arrived just before he had clicked on the ClickDial button, or whether the PBX 18 is alerting him for the special ClickDial procedure, and he must pick up the handset and listen.

In another variant, when the CTI server 20 commands the PBX 18 to make the call to the destination DN, it also commands it to apply interrupted dial tone, normally used for certain features of the Nortel Meridian PBX, for a short period long enough of the user to pick up the handset and hold it to his ear for, say a few seconds. In this way, the user will know that the PBX 18 is making the ClickDial outgoing call rather than routing an incoming call to his telephone.

Whereas the specific embodiments described above are based on a switch in the form of a PBX, it will be appreciated that the present invention embraces other forms of switching function. For example, the switch can be a public network switch, such as a Nortel DMS100 switch which is used in known CTI arrangements in conjunction with a CompuCall CTI controller; and other forms of switching function include switches known as Automatic Call Distributor (ACD), Interactive Voice Response (IVR), and server PBX. Furthermore, the type of switching is not limited to any one form, and, in addition to switched circuit technology, includes Asynchronous Transfer Mode (ATM) switching, and Voice over Internet Protocol (VolP) switching. With regard to this last form of switching, the switch can be a PBX having an Internet Card, or it can be a general purpose computer, e.g. one running Windows NT, having an Internet card, e.g. a Dialogic Internet card, and in this latter case the CTI controller function is provided by a program running in the computer, rather than in a separate controller.

Thus, it can be seen that in general the present invention can be implemented in any computer controlled switch, by means of a suitable controlling program.

It will also be appreciated that the term CTI, although originating from the computer control of voice telephony, is not limited to voice communications and includes other types of communications, e.g. videotelephony, and multimedia.

Furthermore, whereas the above described specific embodiments are third party CTI arrangements, the skilled person will appreciate that the present invention is also applicable to first party CTI arrangements.

Unless the context clearly requires otherwise, throughout the description and the claims, the words "comprise", "comprising" and the like are to be construed in an inclusive as opposed to an exclusive or exhaustive sense; that is to say, in the sense of "including, but not limited to".

## Claims

**1.** A method of operating a computer telephony integration (CTI) system comprising a switch and a CTI controller therefor, and a plurality of user workstations, each workstation comprising a computer connected to the CTI controller and a telephone connected to a corresponding port of the switch, the method comprising the steps of:
(a) receiving at the CTI controller from a said computer a make call request containing a destination number and a source number;
(b) commanding the switch to apply a ringing signal to the port corresponding to that source number;
(c) sending a notification to the CTI controller when it is detected that that port is in off hook condition; and in response to receipt of that notification,
(d) commanding the switch to cease applying the ringing signal; and
(e) commanding the switch to make a call to the destination number from that port.

**2.** A method as claimed in claim 1, including the step of responding to the receipt of the make call request by accessing a profile associated with that source number and determining whether the telephone associated with that source number has on hook dialling capability, and performing the steps (b) to (e) only in the event that the determination result is negative.

**3.** A method as claimed in either claim 1 or claim 2, wherein step (b) comprises applying a ringing signal that is different from that which is applied for normal alerting of an incoming call.

**4.** A method as claimed in any one of claims 1 to 3, including in further response to receipt of that notification, the step of (f) applying distinctive dial tone.

**6.** A computer telephony integration (CTI) system comprising a switch and a CTI controller therefor, and a plurality of user workstations, each workstation comprising a computer connected to the CTI controller and a telephone connected to a corresponding port of the switch, the CTI system comprising:
means responsive to receipt at the CTI controller from a said computer of a make call request containing a destination number and a source number for commanding the switch to apply a ringing signal to the port corresponding to that source number;
means responsive to receipt of a notification that that port is in off hook condition for commanding the switch to cease applying the ringing signal and to make a call to the destination number from that port.

**7.** A system as claimed in claim 6, wherein the means responsive to receipt of a make call request is also arranged to access a profile associated with that source number and to determine whether the telephone associated with that source number has on hook dialling capability, and is arranged such as to command the switch to apply a ringing signal to the port corresponding to that source number only in the event that the determination result is negative.

**8.** A system as claimed in either claim 6 or claim 7, wherein the means responsive to receipt of a make call request is arranged such that said ringing signal that the switch applies is different from that which the switch applies for normal alerting of an incoming call.

**9.** A system as claimed in any one of claims 6 to 8, wherein the means responsive to receipt of a make call request is further responsive to receipt of that notification to command the switch to apply distinctive dial tone to that port.

**10.** A method of operating a computer telephony integration (CTI) system comprising a switch and a CTI controller therefor, and a plurality of user workstations, each workstation comprising a computer connected to the CTI controller and a telephone connected to a corresponding port of the switch, the method being substantially as herein described with reference to the drawings.

**11.** A computer telephony integration (CTI) system comprising a switch and a CTI controller therefor, and a plurality of user workstations, each workstation comprising a computer connected to the CTI controller and a telephone connected to a corresponding port of the switch, the CTI system being substantially as herein described with reference to the drawings.
